# EUROPEAN PATENT APPLICATION

(11) **EP 4 525 541 A1**
(43) Date of publication of application: **19.03.2025**
(21) Application number: 23818998.9
(22) Date of filing: 31.05.2023
(51) Int. Cl.: H04W 74/00, H04W 36/08

(54) **COMMUNICATION METHOD AND APPARATUS**

(30) Priority: 06.06.2022 CN 202210635751
(71) Applicant: Huawei Technologies Co., Ltd., Shenzhen, Guangdong 518129 (CN)
(72) Inventor: LI, Chenwan, Shenzhen, Guangdong 518129 (CN); CHEN, Jun, Shenzhen, Guangdong 518129 (CN); CHEN, Lei, Shenzhen, Guangdong 518129 (CN); LI, Bingzhao, Shenzhen, Guangdong 518129 (CN); WU, Yiling, Shenzhen, Guangdong 518129 (CN); LI, Hantao, Shenzhen, Guangdong 518129 (CN)
(74) Representative: MERH-IP Matias Erny Reichl Hoffmann Patentanwälte PartG mbB
(86) International application number: PCT/CN2023/097468
(87) International publication number: WO 2023/236833

(57) **Abstract**

A communication method and apparatus are provided. The method includes: A network device sends first signaling, indicating a terminal device to initiate random access on a first random access occasion; after receiving the first signaling, if the terminal device cannot complete the random access or data transmission after the random access, for example, stored energy of the terminal device is insufficient, the terminal device may send first indication information to the network device, indicating that a first terminal device cannot complete the random access or data transmission after the random access; and after receiving the first indication information, the network device may send second signaling, indicating the terminal device to initiate random access on a next random access occasion (namely, a second random access occasion) after the first random access occasion. Based on the solutions, the terminal device that selects the second random access occasion can perform access as early as possible, to reduce waiting time, reduce an unnecessary waste of time domain resources, and improve random access efficiency of the terminal device.

## Description

This application claims priority to Chinese Patent Application No. 202210635751.5, filed with the China National Intellectual Property Administration on June 6, 2022 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

A radio frequency identification (radio frequency identification, RFID) technology is a non-contact automatic identification technology. An RFID system usually includes a reader (Reader) and a tag (Tag). The reader may send a continuous wave (continuous wave, CW) to provide energy or a carrier for the tag, and may further send signaling to page the tag, indicating the tag to initiate an operation such as access.

Generally, the tag is located in a coverage area of the reader. A tag closer to the reader has stronger coverage, and can store sufficient energy by using the continuous wave in shorter time. A tag farther away from the reader has weaker coverage, and needs longer time to store sufficient energy by using the continuous wave.

Consequently, when the reader initiates paging after charging the tag for a period of time, indicating the tag to initiate access, there may be some tags in which stored energy is insufficient to support a complete service implementation. In this case, how to process the reader or the tag is an urgent problem to be resolved currently.

### SUMMARY

This application provides a communication method and apparatus, to improve random access efficiency of a terminal device and reduce an unnecessary waste of time domain resources.

According to a first aspect, a communication method is provided. The method may be performed by a network device, may be performed by a component of the network device, for example, a processor, a chip, or a chip system of the network device, or may be implemented by a logical module or software that can implement all or some functions of the network device. The method includes: sending first signaling that indicates a terminal device to initiate random access on a first random access occasion; receiving first indication information from a first terminal device, where the first indication information indicates that the first terminal device cannot complete the random access or data transmission after the random access; and sending second signaling, where the second signaling indicates the terminal device to initiate random access on a second random access occasion, and the second random access occasion is a next random access occasion after the first random access occasion.

Based on this solution, when the network device indicates the terminal device to initiate random access on the first random access occasion, the first indication information from the first terminal device indicates that the first terminal device cannot complete the random access or data transmission after the random access, so that the network device can send the second signaling in time, to indicate the terminal device to initiate random access on the next random access occasion (namely, the second random access occasion) after the first random access occasion, so as to reduce time for another terminal device to wait for the first terminal device to perform access or send data. Therefore, a terminal device that selects the second random access occasion can perform access as early as possible, to reduce waiting time and reduce an unnecessary waste of time domain resources.

In a possible design, that the first indication information indicates that the first terminal device cannot complete the random access or data transmission after the random access includes at least one of the following:
The first indication information indicates that stored energy of the first terminal device is insufficient;
the first indication information indicates that residual energy of the first terminal device is less than or equal to a first threshold;
the first indication information indicates that signal received power of the first terminal device is less than or equal to a second threshold; or
the first indication information indicates that a quantity of times of repeated data transmission of the first terminal device is greater than or equal to a third threshold.

Based on the possible design, the network device may send the second signaling in time based on an indication of the first indication information when the first terminal device has little energy storage, low signal received power, or a large quantity of times of repeated data transmission.

In a possible design, before the sending second signaling, the communication method further includes: receiving a random number from the first terminal device, where the random number is used to initiate the random access.

In a possible design, the random number from the first terminal device and the first indication information from the first terminal device are carried in same signaling.

In a possible design, the communication method further includes: determining, based on the first indication information, not to send response information to the first terminal device.

Based on the possible design, in a possible implementation, after receiving the first indication information, the network device may learn that the first terminal device cannot complete the random access or data transmission after the random access. Consequently, even if the network device sends the response information to the first terminal device, subsequent random access or data transmission cannot be completed, and unnecessary signaling overheads are caused. Therefore, the network device may not send the response information to the first terminal device, to reduce the signaling overheads.

According to a second aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The method includes: receiving first signaling from a network device, where the first signaling indicates the terminal device to initiate random access on a first random access occasion; and sending first indication information to the network device, where the first indication information indicates that a first terminal device cannot complete the random access or data transmission after the random access.

Based on this solution, when the network device indicates the terminal device to initiate random access on the first random access occasion, the first terminal device may indicate, to the network device, that the first terminal device cannot complete the random access or data transmission after the random access, so that the network device can send second signaling in time, to indicate the terminal device to initiate random access on a next random access occasion (namely, a second random access occasion) after the first random access occasion, so as to reduce time for another terminal device to wait for the first terminal device to perform access or send data. Therefore, a terminal device that selects the second random access occasion can perform access as early as possible, to reduce the waiting time and reduce an unnecessary waste of time domain resources.

In a possible design, that the first indication information indicates that a first terminal device cannot complete the random access or data transmission after the random access includes at least one of the following:
The first indication information indicates that stored energy of the first terminal device is insufficient;
the first indication information indicates that residual energy of the first terminal device is less than or equal to a first threshold;
the first indication information indicates that signal received power of the first terminal device is less than or equal to a second threshold; or
the first indication information indicates that a quantity of times of repeated data transmission of the first terminal device is greater than or equal to a third threshold.

According to a third aspect, a communication method is provided. The method may be performed by a network device, may be performed by a component of the network device, for example, a processor, a chip, or a chip system of the network device, or may be implemented by a logical module or software that can implement all or some functions of the network device. The method includes: sending second indication information and third indication information. The second indication information indicates a maximum quantity N of random access occasions, the maximum quantity of random access occasions indicates N random access occasions, and N is a positive integer. The third indication information indicates that last K random access occasions in the N random access occasions are used by a first-type terminal device to initiate random access, and K is a positive integer less than N; the third indication information indicates that the N random access occasions are used by a second-type terminal device to initiate random access; or the third indication information indicates that the N random access occasions are used by a first-type terminal device to initiate random access.

Based on this solution, the network device may configure a later random access occasion for the first-type terminal device, and correspondingly, may configure an earlier random access occasion for the second-type terminal device. Therefore, the second-type terminal device can access a network as early as possible, and time for waiting for the first-type terminal device to perform access or send data is reduced, thereby reducing an unnecessary waste of time domain resources. In addition, the later random access is configured for the first-type terminal device, so that the network device can provide energy for the first-type terminal device when processing random access of the second-type terminal device on the earlier random access occasion, to increase a possibility that the first-type terminal device successfully performs access on the later random access occasion, and further increase an access success rate of the first-type terminal device.

Alternatively, the network device may centrally configure the N random access occasions for the second-type terminal device, so that the second-type terminal device initiates random access on the N random access occasions without waiting for random access of the first-type terminal device to time out, to access the network as early as possible and reduce the unnecessary waste of the time domain resources.

Alternatively, the network device may centrally configure the N random access occasions for the first-type terminal device, so that a terminal device that cannot complete random access before the N random access occasions can initiate random access on the N random access occasions again, to increase an access success rate of the terminal device.

In a possible design, the first-type terminal device is a terminal device that cannot complete the random access or data transmission after the random access.

In a possible design, when the third indication information indicates that the last K random access occasions in the N random access occasions are used by the first-type terminal device to initiate random access, the first-type terminal device is a terminal device that cannot complete the random access or data transmission after the random access on first M random access occasions in the N random access occasions, where M is a positive integer less than or equal to N-K.

In a possible design, that the random access or data transmission after the random access cannot be completed includes at least one of the following: Stored energy of the terminal device is insufficient, residual energy of the terminal device is less than or equal to a first threshold, signal received power of the terminal device is less than or equal to a second threshold, or a quantity of times of repeated data transmission of the terminal device is greater than or equal to a third threshold.

In a possible design, the second-type terminal device includes at least one of the following: a terminal device that can complete the random access or data transmission after the random access, a terminal device with sufficient stored energy, a terminal device whose residual energy is greater than or equal to the first threshold, a terminal device whose signal received power is greater than or equal to the second threshold, or a terminal device whose quantity of times of repeated data transmission is less than or equal to the third threshold.

In a possible design, the second indication information and the third indication information that are sent by the network device may be carried in same signaling.

In a possible design, when the third indication information indicates that the N random access occasions are used by the second-type terminal device to initiate random access, the method further includes: sending third signaling after determining that the second-type terminal device completes random access on the N random access occasions, where the third signaling indicates the first-type terminal device to initiate random access.

Based on the possible design, on the N random access occasions, the network device may provide energy for the first-type terminal device in a process of processing random access or data transmission of the second-type terminal device. Therefore, after the N random access occasions, when the network device sends the third signaling to indicate the first-type terminal device to initiate random access, the first-type terminal device may complete the random access or data transmission after the random access.

According to a fourth aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The method includes: receiving second indication information and third indication information from a network device, and initiating random access based on the second indication information and the third indication information. The second indication information indicates a maximum quantity N of random access occasions, the maximum quantity of random access occasions indicates N random access occasions, and N is a positive integer.

The third indication information indicates that last K random access occasions in the N random access occasions are used by a first-type terminal device to initiate random access, and K is a positive integer less than or equal to N; the third indication information indicates that the N random access occasions are used by a second-type terminal device to initiate random access; or the third indication information indicates that the N random access occasions are used by a first-type terminal device to initiate random access.

For technical effects brought by the fourth aspect, refer to technical effects brought by the third aspect. Details are not described herein again.

In a possible design, the initiating random access based on the second indication information and the third indication information includes: initiating the random access on a third random access occasion.

When the third indication information indicates that the last K random access occasions in the N random access occasions are used by the first-type terminal device to initiate random access, and a terminal device is the first-type terminal device, the third random access occasion is one of the last K random access occasions.

When the third indication information indicates that the N random access occasions are used by the first-type terminal device or the second-type terminal device to initiate random access, the third random access occasion is one of the N random access occasions.

According to a fifth aspect, a communication method is provided. The method may be performed by a network device, may be performed by a component of the network device, for example, a processor, a chip, or a chip system of the network device, or may be implemented by a logical module or software that can implement all or some functions of the network device. The method includes: sending first information and second information, where the first information is used to page at least one terminal device, the second information indicates a maximum quantity N of random access occasions, the maximum quantity of random access occasions indicates N random access occasions, and N is a positive integer. When a first-type terminal device exists in the at least one paged terminal device, an excitation signal is sent, where the excitation signal is used to provide energy. The first-type terminal device is a terminal device that cannot complete the random access or data transmission after the random access on the N random access occasions.

Based on this solution, when finding that the first-type terminal device that cannot complete the random access or data transmission after the random access exists in a terminal device paged by the network device, the network device may send the excitation signal, to provide energy for the terminal device. In this way, the first-type terminal device can store energy by using the excitation signal, to complete subsequent random access or data transmission, so as to increase an access success rate of the first-type terminal device.

In a possible design, that the first-type terminal device exists in the at least one terminal device includes: Uplink data or uplink signaling to be transmitted by the terminal device exists in the at least one terminal device, but the network device receives no uplink data or uplink signaling.

In a possible design, that the random access or data transmission after the random access cannot be completed includes at least one of the following:

Stored energy of the terminal device is insufficient;
residual energy of the terminal device is less than or equal to a first threshold;
signal received power of the terminal device is less than or equal to a second threshold; or
a quantity of times of repeated data transmission of the terminal device is greater than or equal to a third threshold.

According to a sixth aspect, a communication apparatus is provided, and is configured to implement various methods. The communication apparatus may be the network device in the first aspect, the third aspect, or the fifth aspect, or an apparatus included in the network device, for example, a chip or a chip system. Alternatively, the communication apparatus may be the terminal device in the second aspect or the fourth aspect, or an apparatus included in the terminal device, for example, a chip or a chip system. When the apparatus is a chip system, the apparatus may include a chip, or may include a chip and another discrete component.

The communication apparatus includes a corresponding module, unit, or means (means) for implementing the methods. The module, unit, or means may be implemented by hardware, software, or hardware executing corresponding software. The hardware or software includes one or more modules or units corresponding to the functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

According to a seventh aspect, a communication apparatus is provided, including a processor and a communication interface. The communication interface is configured to communicate with a module outside the communication apparatus. The processor is configured to execute a computer program or instructions, so that the communication apparatus performs the method according to any one of the aspects. The communication apparatus may be the network device in the first aspect, the third aspect, or the fifth aspect, or an apparatus included in the network device, for example, a chip or a chip system. Alternatively, the communication apparatus may be the terminal device in the second aspect or the fourth aspect, or an apparatus included in the terminal device, for example, a chip or a chip system. When the apparatus is a chip system, the apparatus may include a chip, or may include a chip and another discrete component.

According to an eighth aspect, a communication apparatus is provided, including at least one processor. The processor is configured to execute a computer program or instructions stored in a memory, so that the communication apparatus performs the method according to any one of the aspects. The memory may be coupled to the processor, or the memory may be independent of the processor. For example, the memory and the processor are two independent modules. The memory may be located outside the communication apparatus, or may be located inside the communication apparatus.

The communication apparatus may be the network device in the first aspect, the third aspect, or the fifth aspect, or an apparatus included in the network device, for example, a chip or a chip system. Alternatively, the communication apparatus may be the terminal device in the second aspect or the fourth aspect, or an apparatus included in the terminal device, for example, a chip or a chip system. When the apparatus is a chip system, the apparatus may include a chip, or may include a chip and another discrete component.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the aspects.

According to a tenth aspect, a computer program product including instructions is provided. When the computer program product runs on a communication apparatus, the communication apparatus is enabled to perform the method according to any one of the aspects.

It may be understood that when the communication apparatus provided in any one of the sixth aspect to the tenth aspect is a chip, a sending action/function of the communication apparatus may be understood as outputting information, and a receiving action/function of the communication apparatus may be understood as inputting information.

For technical effects brought by any one of the designs of the sixth aspect to the tenth aspect, refer to technical effects brought by different designs of the first aspect to the fifth aspect. Details are not described herein again.

According to an eleventh aspect, a communication system is provided. The communication system includes the network device in the foregoing aspects and the terminal device in the foregoing aspects.

### BRIEF DESCRIPTION OF DRAWINGS

FIG. 1 is a diagram of a communication link between a reader and a tag in a distributed architecture according to this application;
FIG. 2 is a schematic flowchart of inventory and access according to this application;
FIG. 3 is a diagram of a time sequence of inventory, access, and charging according to this application;
FIG. 4 is a diagram of a structure of a communication system according to this application;
FIG. 5 is a diagram of a structure of another communication system according to this application;
FIG. 6 is a diagram of a structure of still another communication system according to this application;
FIG. 7 is a diagram of a structure of a communication apparatus according to this application;
FIG. 8 is a schematic flowchart of a communication method according to this application;
FIG. 9 is a diagram of a time sequence of triggering a random access occasion according to this application;
FIG. 10 is a schematic flowchart of another communication method according to this application;
FIG. 11 is a diagram of time sequence comparison of a communication procedure according to this application;
FIG. 12 is a schematic flowchart of still another communication method according to this application;
FIG. 13 is a diagram of random access occasion allocation according to this application;
FIG. 14 is a schematic flowchart of yet another communication method according to this application;
FIG. 15 is a diagram of a time sequence of a communication method according to this application;
FIG. 16 is a diagram of a structure of a network device according to this application; and
FIG. 17 is a diagram of a structure of a terminal device according to this application.

### DESCRIPTION OF EMBODIMENTS

In the descriptions of this application, unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, and only B exists, where A and B may be singular or plural.

In the descriptions of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, words such as "first" and "second" are used to distinguish between same items or similar items that have basically same functions and effects in embodiments of this application. A person skilled in the art may understand that the words such as "first" and "second" do not limit a quantity or an execution sequence, and the words such as "first" and "second" do not indicate a definite difference.

In embodiments of this application, a word such as "example" or "for example" is used to represent giving an example, an illustration, or a description. Any embodiment or design scheme described as an "example" or with "for example" in embodiments of this application should not be explained as being more preferred or having more advantages than another embodiment or design scheme. Exactly, use of the word such as "example" or "for example" is intended to present a relative concept in a specific manner for ease of understanding.

It may be understood that "an embodiment" mentioned in the entire specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on the implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise specified or there is a logic conflict, terms and/or descriptions in different embodiments are consistent and may be mutually referenced, and different embodiments may be combined based on internal logical relationships thereof to form a new embodiment. The following implementations of this application are not intended to limit the protection scope of this application.

For ease of understanding of the technical solutions in embodiments of this application, the following first briefly describes technologies related to this application.

A radio frequency identification (radio frequency identification, RFID) technology is a non-contact automatic identification technology. An RFID system generally includes a reader (Reader) and a tag (Tag).

The tag is an RFID tag. The tag may be classified into a passive tag, a semi-active tag, or an active tag. For the passive tag, working energy of the passive tag is provided by the reader. For example, a part of energy of a continuous wave (continuous wave, CW) sent by the reader is used for internal processing such as encoding/decoding and modulation/demodulation of the tag. In addition, the continuous wave is further used as a carrier to carry uplink information of the tag. For the semi-passive tag, a battery may be included inside the semi-passive tag. Internal processing such as encoding/decoding and modulation/demodulation may be powered by the battery, but the continuous wave of the reader still needs to be used as a carrier.

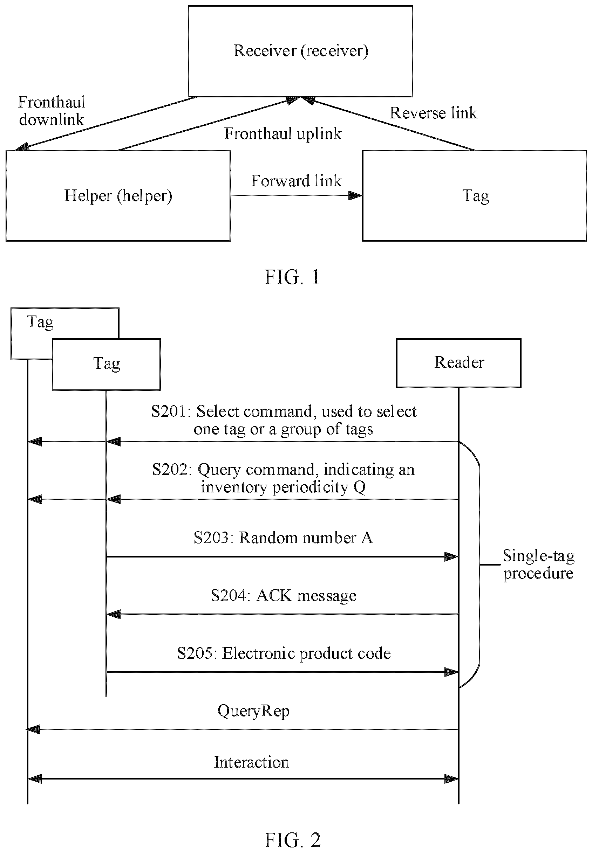

The reader is a device having a read/write function, and may be, for example, a device for reading or writing tag information. Alternatively, the reader may be understood as a device communicating with the tag. For example, in a separated architecture, as shown in FIG. 1, the reader may include a helper (helper) and a receiver (receiver). A link from the helper to the tag may be referred to as a forward link or a downlink, a link from the tag to the receiver may be referred to as a reverse link or an uplink, a link from the receiver to the helper may be referred to as a fronthaul downlink, and a link from the helper to the receiver may be referred to as a fronthaul uplink. In this application, the helper may also be referred to as an excitation source.

For example, the helper is mainly configured to send the continuous wave to the tag on the forward link, and a signal sent by the tag is received by the receiver on the reverse link. In addition, the receiver may generate RFID signaling, and send the RFID signaling to the helper through the fronthaul downlink, and then the helper forwards the RFID signaling to the tag through the forward link.

In RFID, the reader may perform operations such as selection (selection), inventory (inventory), and access (access) on the tag. The selection operation is used to select one tag or a group of tags for inventory and access. The inventory operation may be understood as a process in which the reader identifies the tag. The access operation may be understood as a process in which the reader interacts with the tag. The tag needs to be identified by the reader before being accessed.

For example, a procedure in which a reader performs selection, inventory, and access on a tag may be shown in FIG. 2. Refer to FIG. 2. The procedure includes the following steps.

S201: The reader sends a select (select) command. The select command may be used to select one tag or a group of tags.

For example, the select command may include memory information, and a tag of which data stored in a storage area indicated by the memory information is consistent with a mask value is a tag selected by using the select command. The mask value may be indicated in the select command.

For example, the select command may include the following fields: a command field, a target field, an action field, a MemBank field, a pointer field, a length field, a mask field, a truncate field, and a cyclic redundancy check (cyclic redundancy check, CRC) field.

When a value of the command field is 1010, it indicates that a command is the select command.

The target field indicates whether the select command is used to change a state of a select flag (select flag, SL) bit or a state of an inventoried (Inventoried) flag bit.

The inventoried flag bit has four types (or referred to as sessions (sessions)), and each type corresponds to two states: a state A and a state B. A state of an inventoried flag bit of a tag that has been currently inventoried is toggled, so that a same tag can be prevented from being identified for a plurality of times in one round of inventory process. An SL includes two states: a declared state and an undeclared state.

The action field indicates a change policy of the state of the SL or a state of the inventoried flag bit. A tag paged by the reader may change the state of the SL or the inventoried flag bit according to the policy.

The MemBank field, the pointer field, and the length field jointly indicate the foregoing memory information.

The mask field indicates the mask value.

The truncate field indicates the tag to return a part or all of an electronic product code (electronic product code, EPC).

The CRC field is used to carry CRC.

S202: The reader sends a query command.

The query command may indicate a type of inventoried flag bit (that is, Sx, where x may be 0, 1, 2, or 3) and a state X (where X may be A or B) of the inventoried flag bit. It indicates that the reader selects the inventoried flag bit Sx whose state is X in the tag to participate in inventory and access.

For a plurality of tags selected by the reader, inventory and access are performed in a time division multiplexing manner. To be specific, after ending performing inventory and access on a tag, the reader starts to perform inventory and access on a next tag. The following steps are described by using inventory and access on one tag as an example.

S203: The tag sends a random number (random number, RN) A. For example, the random number A may be a 16-bit random number (RN16).

If a tag matches selection of the reader, or is the tag selected by the reader, and a state of an inventoried flag bit Sx of the tag is consistent with the state of the inventoried flag bit Sx indicated by the query command, after the tag receives the query command, the tag may generate a random number B based on a parameter Q indicated by the query command. For example, a value range of the random number B is 0 to 2*^{Q}* - 1. Then, each time the tag receives a QueryRep command, the tag subtracts the random number B by 1. When the random number B is subtracted to 0, the tag sends the random number A.

In addition, after receiving the query command, the tag may toggle the state of the inventoried flag bit Sx. For example, when X is A, the tag updates the state of the inventoried flag bit Sx from A to B.

S204: If the reader successfully receives the random number A, the reader sends an acknowledgment (acknowledgment, ACK) message. The message includes the random number A.

After receiving, within specified time, the acknowledgment message that carries the random number A sent by the tag, the tag may perform the following step S205.

S205: The tag sends the electronic product code (electronic product code, EPC).

Optionally, after step S205, the reader may send an instruction to the tag, perform an operation such as reading or writing on the tag, and interact with the tag. After receiving the instruction, the tag may respond to the instruction.

After ending performing inventory and access on a current tag, the reader may send the QueryRep command to start to perform inventory and access on a next tag. After receiving the QueryRep command, a tag matching the QueryRep command may toggle a state X of an inventoried flag bit Sx indicated by the QueryRep command. For example, when X is A, the tag updates the state of the inventoried flag bit Sx from A to B. The tag matching the QueryRep command means that a type of an inventoried flag bit that is of the tag and that participates in inventory and access is the same as a type of the inventoried flag bit indicated by the QueryRep command.

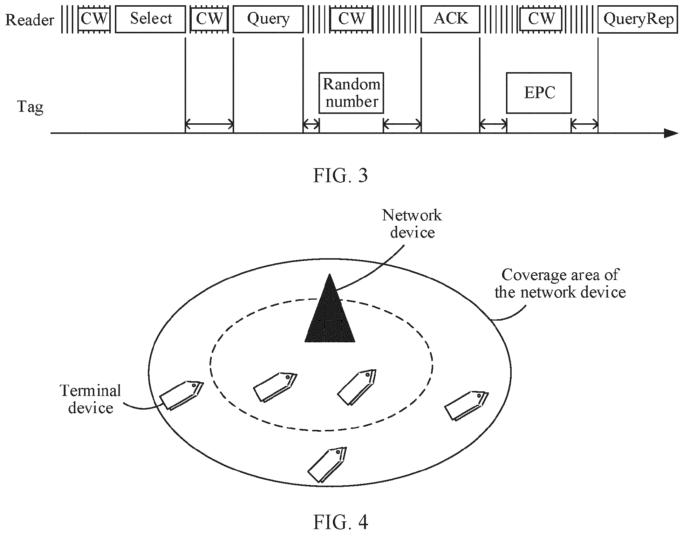

For example, as shown in FIG. 3, before the foregoing process starts and when the reader performs a receiving action in the foregoing process, the reader may send a CW and the like, to provide energy and a carrier for the tag.

With diversification of communication requirements and development of communication technologies, use of an RFID technology in a cellular network becomes an important research direction. For example, the foregoing step S201 may be used as a paging process in the cellular network (with a proper variation). The foregoing steps S202 to S204 may be used as a random access process in the cellular network (with a proper variation). The foregoing step S205 and the access operation may be used as a data transmission process or the like in the cellular network.

However, in the cellular network, a coverage area of the reader may be large. A tag far away from the reader has poor coverage, and needs long time to obtain sufficient energy. Consequently, after the reader charges the tag for a period of time, energy obtained by the tag may be insufficient to support the tag in completing complete procedures such as access and transmission.

Based on this, this application provides a communication method, to reduce, when stored energy of a tag is insufficient, time for another tag with sufficient stored energy to wait for access of the tag with insufficient stored energy, so that the tag with sufficient stored energy can perform access as early as possible, the waiting time is reduced, and an unnecessary waste of time domain resources is reduced, thereby improving resource utilization.

The technical solutions provided in this application may be applied to various communication systems. The communication system may be a 3^{rd} generation partnership project (3^{rd} generation partnership project, 3GPP) communication system, for example, a 4^{th} generation (4^{th} generation, 4G) long term evolution (long term evolution, LTE) system, a 5^{th} generation (5^{th} generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, an internet of things (Internet of Things, IoT) system, a passive IoT (passive IoT, PIoT) system, or another next generation communication system. Alternatively, the communication system may be a non-3GPP communication system, for example, a wireless local area network (wireless local area network, WLAN). This is not limited.

The communication system applicable to this application is merely an example for description, and the communication system applicable to this application is not limited thereto. This is uniformly described herein, and details are not described below again.

FIG. 4 shows an example of a communication system according to an embodiment of this application. The communication system includes a network device and at least one terminal device. The terminal device may be located in a coverage area provided by the network device. For example, different terminal devices may be located at different locations in the coverage area provided by the network device.

Optionally, the terminal device may be a passive terminal device. To be specific, energy and a carrier that are needed when the terminal device works may be provided by the network device.

Optionally, the network device in this application may be used as a reader, or the network device may implement a function of the reader. The terminal device may be used as a tag, or the terminal device may be a device including the tag.

Optionally, in a product form, the network device in this application may be an evolved NodeB (evolved NodeB, eNB or eNodeB) in an LTE or LTE-advanced (LTE-Advanced, LTE-A) system, for example, a conventional macro base station eNB or a micro base station eNB in a heterogeneous network scenario; may be a next generation NodeB (next generation NodeB, gNodeB or gNB) in a 5G system; may be a transmission reception point (transmission reception point, TRP); may be an access point (access point, AP) in a Wi-Fi system; may be a wireless relay node or a wireless backhaul node, namely, an IAB node, in integrated access and backhaul (integrated access and backhaul, IAB); or may be a device that implements a base station function in an IoT, V2X, D2D, or M2M. This is not specifically limited embodiments of this application.

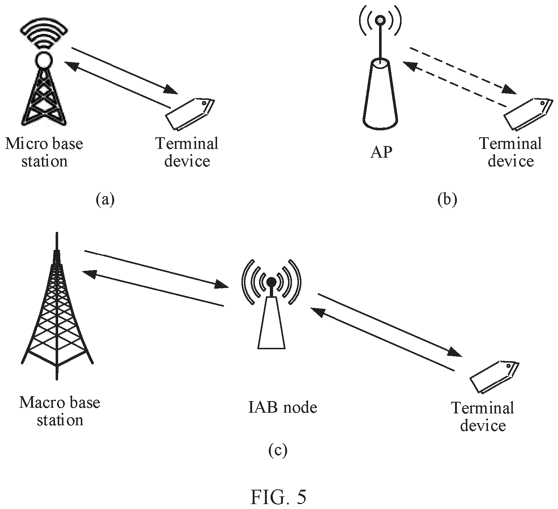

For example, base stations (base stations, BSs) in embodiments of this application may include base stations in various forms. As shown in (a) in FIG. 5, the base station may be a micro base station (Micro BS), and the micro base station may communicate with the terminal device through a Uu interface. As shown in (b) in FIG. 5, the base station may be an AP, and the AP may communicate with the terminal device through a sidelink (sidelink, SL). As shown in (c) in FIG. 5, the base station may be an IAB node, and the IAB node may communicate with a macro base station (Macro BS) through a Uu interface, and communicate with the terminal device through the Uu interface.

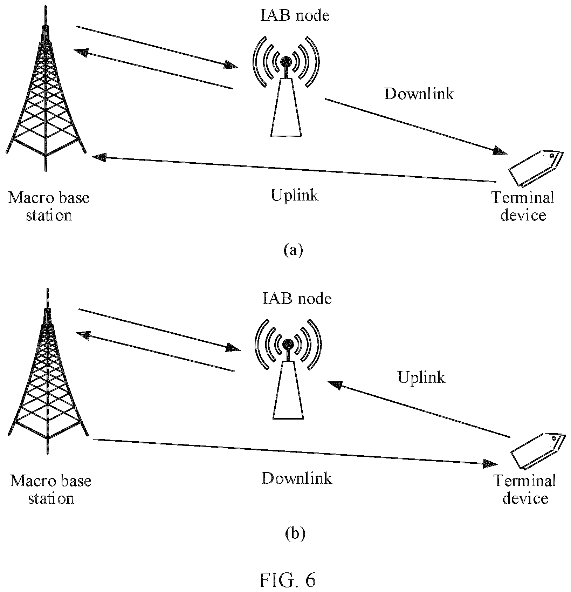

Optionally, in another product form, the network device in this application may include a macro base station and an IAB node (or a relay node). As shown in (a) in FIG. 6, a downlink may be established between the IAB node and the terminal device, and an uplink may be established between the macro base station and the terminal device. In other words, the IAB node may be used as an excitation source to provide energy or a carrier for the terminal device, to implement a function of the helper shown in FIG. 1, and the macro base station may implement a function of the receiver shown in FIG. 1. Alternatively, as shown in (b) in FIG. 6, an uplink may be established between the IAB node and the terminal device, and a downlink may be established between the macro base station and the terminal device.

Optionally, in a network structure, the network device may be a central unit (central unit, CU) or a distributed unit (distributed unit, DU), or the network device may include a CU and a DU. For example, the CU and the DU may be divided based on a protocol layer of a wireless network, or may be divided in another manner. This is not specifically limited in this application.

In some embodiments, the CU may include a CU control plane (CU control plane, CU-CP) and a CU user plane (CU user plane, CU-UP).

Optionally, the terminal device in this application may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be deployed on land, including an indoor or outdoor terminal device, a handheld or vehicle-mounted terminal device; may be deployed on water (for example, on a ship); or may be deployed in the air (for example, on an airplane, a balloon, or a satellite).

Optionally, in a product form, the terminal device may be, for example, a wireless terminal in IoT, V2X, D2D, M2M, a 5G network, or a future evolved public land mobile network (public land mobile network, PLMN). For example, the terminal device may be a drone, an IoT device (for example, a sensor, an electricity meter, or a water meter), a V2X device, a station (station, STA) in a WLAN, a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle to uncrewed aerial vehicle (UAV to UAV, U2U) communication capability. The terminal may be mobile or fixed. This is not specifically limited in this application.

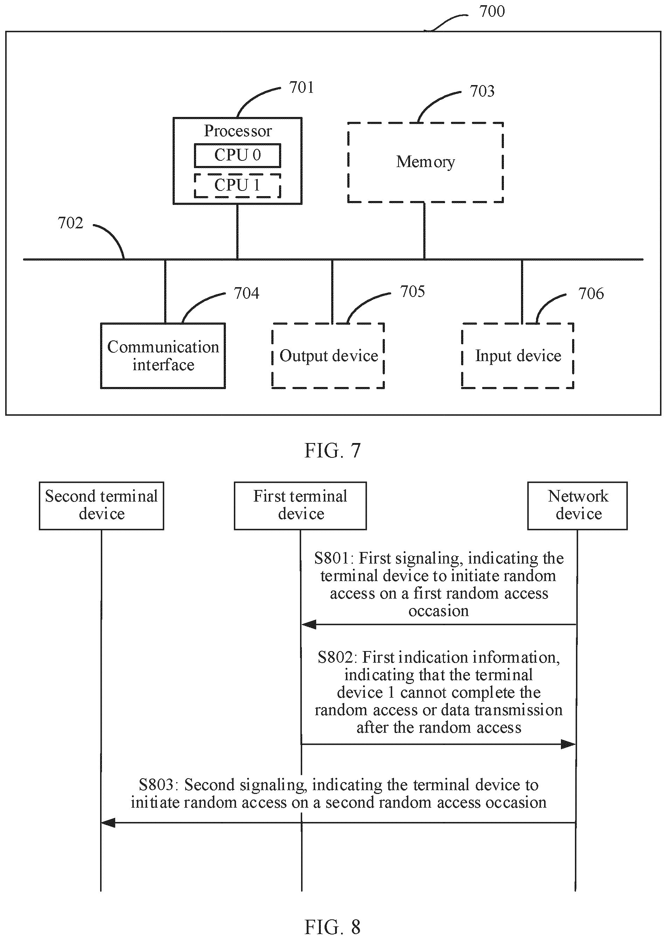

Optionally, during specific implementation, the terminal device or the network device may use a composition structure shown in FIG. 7, or include components shown in FIG. 7. FIG. 7 is a diagram of composition of a communication apparatus 700 according to this application. The communication apparatus 700 may be a terminal device, or a chip or a system on chip in the terminal device; or may be a network device, or a module, a chip, or a system on chip in the network device.

As shown in FIG. 7, the communication apparatus 700 includes at least one processor 701 and at least one communication interface (FIG. 7 is described merely by using an example in which one communication interface 704 and one processor 701 are included). Optionally, the communication apparatus 700 may further include a communication bus 702 and a memory 703.

The processor 701 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a component, or a software module. This is not limited.

The communication bus 702 is configured to connect different components in the communication apparatus 700, so that the different components can communicate with each other. The communication bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 7, but this does not mean that there is only one bus or only one type of bus.

The communication interface 704 is configured to communicate with another device or a communication network. For example, the communication interface 704 may be a module, a circuit, a transceiver, or any apparatus that can implement communication. Optionally, the communication interface 704 may alternatively be an input/output interface located in the processor 701, and is configured to implement signal input and signal output of the processor.

The memory 703 may be an apparatus having a storage function, and is configured to store instructions and/or data. The instructions may be a computer program.

For example, the memory 703 may be a read-only memory (read-only memory, ROM) or another type of static storage device that can store static information and/or instructions, a random access memory (random access memory, RAM) or another type of dynamic storage device that can store information and/or instructions, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium, or another magnetic storage device. This is not limited.

It should be noted that the memory 703 may exist independent of the processor 701, or may be integrated with the processor 701. The memory 703 may be located inside the communication apparatus 700, or may be located outside the communication apparatus 700. This is not limited. The processor 701 may be configured to execute the instructions stored in the memory 703, to implement a method provided in the following embodiments of this application.

In an optional implementation, the communication apparatus 700 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive user input in a plurality of manners. For example, the input device 706 may be a mouse, a keyboard, a touchscreen device, or a sensor device.

It should be noted that the structure shown in FIG. 7 does not constitute a specific limitation on a terminal device or a network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

With reference to the accompanying drawings, the following describes in detail the method provided in embodiments of this application by using interaction between the network device and the plurality of terminal devices shown in FIG. 4 as an example.

It may be understood that, in embodiments of this application, an execution body may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

It should be noted that names of messages between the devices, names of parameters in the messages, or the like in the following embodiments of this application are merely examples, and there may be other names during specific implementation. This is not specifically limited in embodiments of this application.

For example, the method provided in the following embodiments of this application may be applied to a scenario in which an RFID technology is applied to a cellular network, may be applied to a scenario in which a coverage area of a reader is large, or may be applied to any scenario in which stored energy of a tag is insufficient. Certainly, an application scenario of this application is merely described herein as an example. The application scenario does not constitute any limitation on this application, and an application scenario of the method provided below is not specifically limited in this application either.

FIG. 8 shows a communication method according to an embodiment of this application. The communication method includes the following steps.

S801: A network device sends first signaling. Correspondingly, a terminal device receives the first signaling from the network device. The first signaling indicates the terminal device to initiate random access on a first random access occasion.

Optionally, the first random access occasion may be one of N random access occasions. The N random access occasions may be configured by the network device, and N is a positive integer. For example, before step S801, the network device may send signaling (denoted as signaling A) to page at least one terminal device to access a network, or to select at least one terminal device and change a flag bit state of the selected terminal device. In addition, the network device may configure a maximum quantity N of random access occasions, and the maximum quantity N of random access occasions indicates the N random access occasions.

Optionally, the network device may send the signaling A after receiving a paging instruction or an inventory instruction from a core network. For example, an implementation of the signaling A may be the same as or similar to an implementation of the foregoing select command or the foregoing query command. For details, refer to related descriptions of the select command or the query command. Details are not described herein again.

Optionally, the random access occasion in this application may be duration with a variable length, and the terminal device may initiate random access on the random access occasion. Further, the terminal device and the network device may perform data transmission on the random access occasion. In addition, the random access occasion may also be referred to as a random access opportunity or a random access slot. Certainly, the random access occasion may further have another name. This is not specifically limited in this application.

In an example, the random access occasion in this application is not a time unit with a fixed length, and duration of different random access occasions may be the same or may be different. The maximum quantity N of random access occasions configured by the network device indicates a quantity of random access occasions. A start moment of the random access occasion may be determined by specific signaling sent by the network device. To be specific, that the network device sends the specific signaling once or the terminal device receives the specific signaling once may indicate that one random access occasion starts. The specific signaling may be, for example, a query command or a QueryRep command.

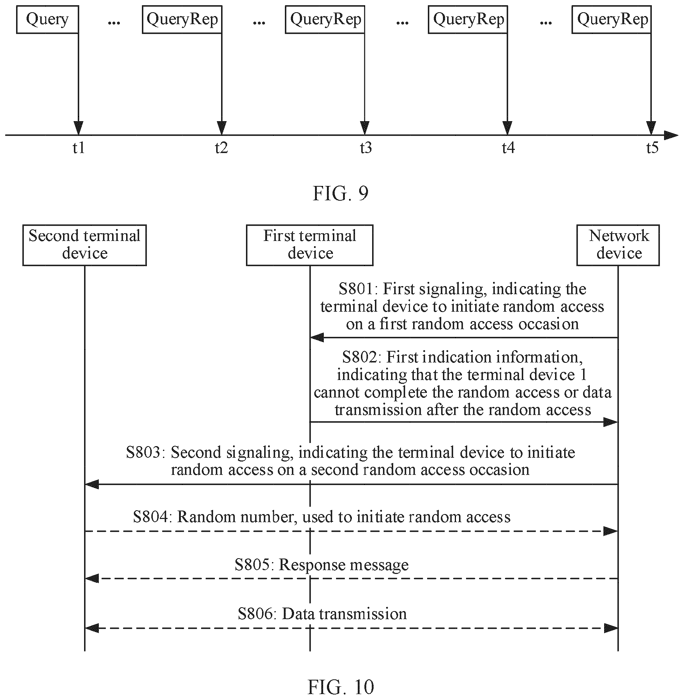

For example, the maximum quantity N of random access occasions configured by the network device is equal to 5, the specific signaling is the query command or the QueryRep command, and the random access occasion starts at a moment when the terminal device receives the query command or the QueryRep command. As shown in FIG. 9, a 1^{st} random access occasion starts at a moment t1; a 2^{nd} random access occasion starts at a moment t2; ...; and a 5^{th} random access occasion starts at a moment t5.

Optionally, after receiving the maximum quantity of random access occasions configured by the network device, the terminal device may select one of the random access occasions, for example, select an n^{th} random access occasion, to initiate random access, where n may be a positive integer from 1 to N. Then, when the n^{th} random access occasion is triggered, related processing is performed. The related processing is described in subsequent embodiments, and details are not described herein.

Optionally, based on the implementation before the foregoing step S801, that the first signaling indicates the terminal device to initiate random access on a first random access occasion may also be understood as that the first signaling is used to trigger (or activate) the first random access occasion.

Optionally, the first signaling may also be referred to as paging signaling, select signaling, query signaling, or QueryRep signaling. A name of the first signaling is not specifically limited in this application. For example, an implementation of the first signaling may be the same as or similar to an implementation of the select command, the query command, or the QueryRep command. For details, refer to related descriptions of the select command, the query command, or the QueryRep command. Details are not described herein again.

Optionally, after the network device sends the first signaling, a terminal device in a coverage area provided by the network device may receive the first signaling. In this application, an example in which terminal devices in the coverage area include a first terminal device and a second terminal device is used for description.

It is assumed that the first random access occasion is a random access occasion selected by the first terminal device. In this case, after receiving the first signaling, the first terminal device may determine that the random access occasion selected by the first terminal device arrives, and may determine whether the first terminal device can complete the random access or data transmission after the random access.

Optionally, when at least one of the following conditions is met, the first terminal device may determine that the random access or data transmission after the random access cannot be completed: Stored energy of the first terminal device is insufficient, residual energy of the first terminal device is less than or equal to a first threshold, received power of a signal received by the first terminal device is less than or equal to a second threshold, a quantity of times of repeated data transmission of the first terminal device is greater than or equal to a third threshold, or a coverage level of the first terminal device is greater than or equal to n, where n is a positive integer.

Optionally, in this application, energy may be understood as an electricity quantity. Correspondingly, energy of the terminal device may also be understood as an electricity quantity of the terminal device. The energy and the electricity quantity may be replaced with each other.

For example, the residual energy of the first terminal device may be residual energy when the first terminal device receives the first signaling. The signal received by the first terminal device may be the first signaling. In other words, signal received power of the first signaling is less than or equal to the second threshold. Alternatively, the signal received by the first terminal device may be signaling before the first signaling. The quantity of times of repeated data transmission of the first terminal device may be configured by the network device. When the received power of the signal received by the first terminal device is low, or the quantity of times of repeated data transmission is large, it indicates that the first terminal device has poor coverage, and needs long time to store sufficient energy. The coverage level of the first terminal device may be determined by the first terminal device based on measurement. For example, the first terminal device may measure received power of a signal from the network device, to determine the coverage level based on a range of the received power. Alternatively, the coverage level of the first terminal device may be determined based on successfully decoded information. For example, when successfully decoding the quantity of times of repeated data transmission configured by the network device, the terminal device may determine the coverage level based on the quantity of times of repeated data transmission.

Optionally, the network device may indicate a type of a subsequently executed service to the terminal device, and the terminal device may estimate, based on the type of the service, a quantity of pieces of signaling that needs to be exchanged for executing the service, to determine, based on the quantity of pieces of signaling, whether stored energy of the terminal device is sufficient. Alternatively, the first threshold, the second threshold, the third threshold, or the coverage level n is determined based on the quantity of pieces of signaling.

When determining that the random access or data transmission after the random access cannot be completed, the first terminal device may perform the following step S802.

S802: The first terminal device sends first indication information to the network device. Correspondingly, the network device receives the first indication information from the first terminal device.

The first indication information indicates that the first terminal device cannot complete the random access and/or data transmission after the random access. It may be understood that, because the random access occasion selected by the first terminal device is the first random access occasion, it may also be considered that the first indication information indicates that the first terminal device cannot complete the random access or data transmission after the random access on the first random access occasion.

Optionally, that the first indication information indicates that the first terminal device cannot complete the random access or data transmission after the random access may include that the first indication information indicates at least one of the following: The stored energy of the first terminal device is insufficient, the residual energy of the first terminal device is less than or equal to the first threshold, the signal received power of the first terminal device is less than or equal to the second threshold, the quantity of times of repeated data transmission of the first terminal device is greater than or equal to the third threshold, or the coverage level of the first terminal device is greater than or equal to n, where n is a positive integer.

Alternatively, that the first indication information indicates that the first terminal device cannot complete the random access or data transmission after the random access may be replaced with at least one of the following: The first indication information indicates that the stored energy of the first terminal device is insufficient, the first indication information indicates that the residual energy of the first terminal device is less than or equal to the first threshold, the first indication information indicates that the signal received power of the first terminal device is less than or equal to the second threshold, or the first indication information indicates that the quantity of times of repeated data transmission of the first terminal device is greater than or equal to the third threshold.

Optionally, if a plurality of terminal devices choose to initiate random access on the first random access occasion, and none of the plurality of terminal devices can complete the random access or data transmission after the random access, all the plurality of terminal devices may send first indication information to the network device, and the first indication information sent by the plurality of terminal devices may be the same. In this scenario, even if the plurality of terminal devices simultaneously send the first indication information, because different terminal devices send same information, the network device may correctly receive the first indication information, to reduce a decoding failure caused by collision.

Optionally, in step S802, in addition to the first indication information, the first terminal device may further send a random number to the network device. Correspondingly, the network device receives the random number, where the random number is used to initiate the random access. The random number may be a 16-bit random number. For a plurality of terminal devices paged by the network device, processes in which different terminal devices send random numbers are independent, and the random numbers sent by the different terminal devices may be different.

Optionally, the first indication information and the random number may be carried in same signaling. For example, the first indication information and the random number may be carried in a random access message. Alternatively, the first indication information and the random number may be carried in different signaling. For example, the random number is carried in a random access (request) message, and the first indication information is carried in a message sent after the random access (request) message. This is not specifically limited in this application.

Optionally, after receiving the first indication information, the network device may determine, based on the first indication information, not to send response information to the first terminal device. For example, when the first terminal device sends the random number, the response information may be understood as a response to the random number, conflict resolution information, a conflict resolution message, a response to the first indication information and the random number, or a response to the random access (request) message. When the first terminal device does not send the random number, the response information may be understood as response information of the first indication information.

In a possible implementation, after receiving the first indication information, the network device may learn that the first terminal device cannot complete the random access or data transmission after the random access. Consequently, even if the network device sends the response information to the first terminal device, subsequent random access or data transmission cannot be completed, and unnecessary signaling overheads are caused. Therefore, the network device may not send the response information to the first terminal device, to reduce the signaling overheads.

S803: The network device sends second signaling. Correspondingly, the terminal device receives the second signaling from the network device.

Optionally, the network device may send the second signaling to the terminal device after determining not to send the response information to the first terminal device.

The second signaling indicates the terminal device to initiate random access on a second random access occasion. The second random access occasion is a next (or a 1^{st}) random access occasion after the first random access occasion.

Optionally, that the second signaling indicates the terminal device to initiate random access on a second random access occasion may also be understood as that the second signaling is used to trigger (or activate) the second random access occasion. For example, an implementation of the second signaling may be the same as or similar to the implementation of the QueryRep command. For details, refer to related descriptions of the QueryRep command. Details are not described herein again.

Optionally, after the network device sends the second signaling, the terminal device in the coverage area provided by the network device may receive the second signaling. It is assumed that the second random access occasion is a random access occasion selected by the second terminal device. After receiving the second signaling, the second terminal device may determine that the random access occasion selected by the second terminal device arrives, and may determine whether the second terminal device can complete the random access or data transmission after the random access.

In a possible implementation, when the second terminal device can complete the random access or data transmission after the random access, as shown in FIG. 10, the communication method may further include the following steps.

S804: The second terminal device sends a random number to the network device. Correspondingly, the network device receives the random number from the second terminal device.

The random number is used by the second terminal device to initiate random access. The random number sent by the second terminal device may be the same as or different from the random number sent by the first terminal device. This is not specifically limited in this application.

S805: The network device sends a response message to the second terminal device. Correspondingly, the second terminal device receives the response message from the network device.

The response message may include the random number sent by the second terminal device in step S804 or identification information of the second terminal device. For example, the response message may be referred to as a conflict resolution message or an acknowledgment response message. A name of the response message is not specifically limited in this application.

S806: The second terminal device performs data transmission with the network device.

For example, the second terminal device may send identification information such as an EPC of the second terminal device to the network device. The network device may perform operations such as reading and writing on the second terminal device.

After data transmission between the second terminal device and the network device is completed, the network device may send specific signaling to trigger (or activate) a next random access occasion after the second random access occasion.

In another possible implementation, when the second terminal device cannot complete the random access or data transmission after the random access, the second terminal device may send indication information to the network device. The indication information may indicate that the second terminal device cannot complete the random access or data transmission after the random access. For details, refer to related descriptions in the foregoing step S802. Details are not described herein again.

Based on this solution, when the network device indicates the terminal device to initiate random access on the first random access occasion, the first terminal device that selects the first random access occasion may indicate, to the network device, that the first terminal device cannot complete the random access or data transmission after the random access, so that the network device can send the second signaling in time, to indicate the terminal device to initiate random access on the next random access occasion (namely, the second random access occasion) after the first random access occasion, so as to reduce time for waiting for the first terminal device to perform access or send data. Therefore, a terminal device that selects the second random access occasion can perform access as early as possible, to reduce the waiting time and reduce an unnecessary waste of time domain resources.

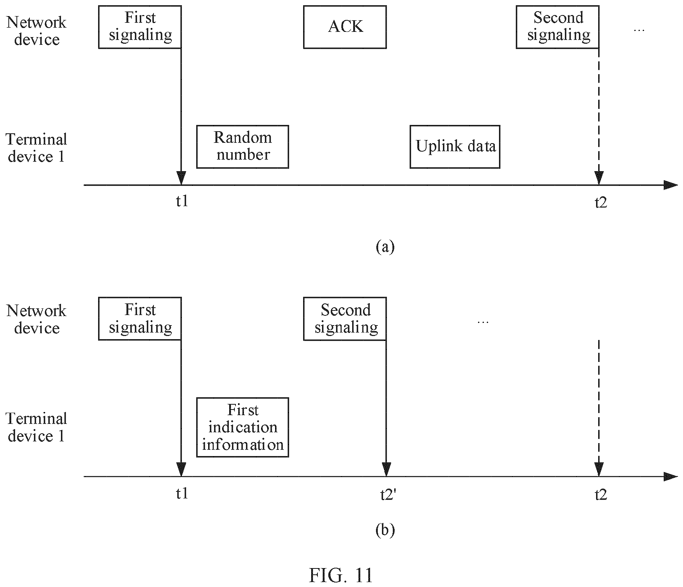

For example, it is assumed that the first terminal device can complete random access and subsequent data transmission. In this case, as shown in (a) in FIG. 11, after receiving the first signaling at the moment t1, the first terminal device may send the random number to the network device. Correspondingly, the network device returns an ACK message to the first terminal device. Then, the first terminal device sends uplink data to the network device. After data transmission between the network device and the first terminal device is completed, the network device sends the second signaling. At the moment t2, the terminal device receives the second signaling. It indicates that the second random access occasion starts at the moment t2.

If the first terminal device cannot complete random access or subsequent data transmission, based on the foregoing solution provided in this application, as shown in (b) in FIG. 11, after receiving the first signaling at the moment t1, the first terminal device may send the first indication information to the network device. After receiving the first indication information, the network device sends the second signaling in time. At a moment t2', the terminal device receives the second signaling. It indicates that the second random access occasion starts at the moment t2'. Based on this, in the solution of this application, when the terminal device cannot complete the random access or data transmission after the random access, a start moment of a next random access occasion may be advanced, to reduce waiting time of a terminal device that selects the next random access occasion, and reduce the unnecessary waste of the time domain resources.

Optionally, when performing a receiving action, the network device may send an excitation signal, to provide energy and a carrier for the terminal device in the coverage area of the network device. Therefore, after the first random access occasion, the network device may provide energy for the first terminal device in a process of processing random access or data transmission of another terminal device. After random access or data transmission processing of a plurality of terminal devices paged by the network device in a current round is completed, the network device may page the first terminal device again, to provide a random access occasion for the first terminal device. In this case, the first terminal device may have stored sufficient energy. Therefore, the first terminal device may complete random access and data transmission on the random access occasion provided by the network device again.

In addition to the communication method shown in FIG. 8, this application further provides a communication method. In the communication method, a network device may respectively configure random access occasions for a first-type terminal device and a second-type terminal device.

In a possible implementation, the first-type terminal device is a terminal device that cannot complete the random access or data transmission after the random access. For example, that the terminal device cannot complete the random access or data transmission after the random access may include (or be replaced with) at least one of the following: Stored energy of the terminal device is insufficient, residual energy of the terminal device is less than or equal to a first threshold, signal received power of the terminal device is less than or equal to a second threshold, or a quantity of times of repeated data transmission of the terminal device is greater than or equal to a third threshold.

In a possible implementation, the second-type terminal device may include at least one of the following: a terminal device that can complete the random access or data transmission after the random access, a terminal device with sufficient stored energy, a terminal device whose residual energy is greater than or equal to the first threshold, a terminal device whose signal received power is greater than or equal to the second threshold, or a terminal device whose quantity of times of repeated data transmission is less than or equal to the third threshold.

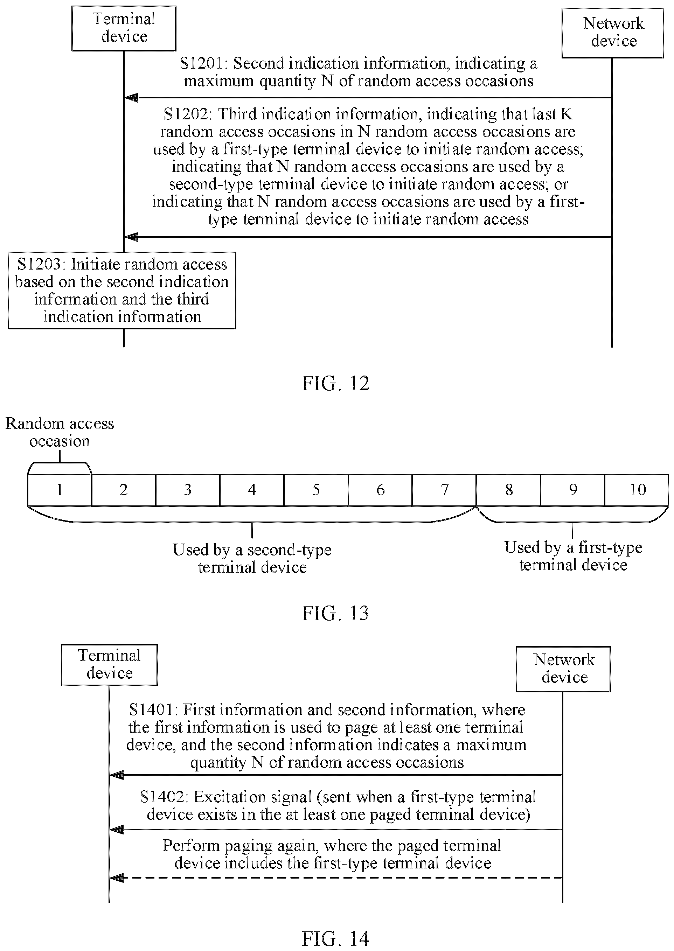

The following describes the communication method in detail. As shown in FIG. 12, the communication method includes the following steps.

S1201: The network device sends second indication information. Correspondingly, a terminal device receives the second indication information from the network device.

The second indication information indicates a maximum quantity N of random access occasions, and the maximum quantity of random access occasions indicates N random access occasions. For the random access occasion, refer to related descriptions in the foregoing step S801. Details are not described herein again.

Optionally, the second indication information may explicitly indicate the maximum quantity N of random access occasions, for example, indicate a value of N. Alternatively, the second indication information may implicitly indicate the maximum quantity N of random access occasions, for example, indicate a parameter for calculating N.

Optionally, the network device may send signaling to page at least one terminal device to access a network. In this case, a receiver of information sent by the network device may be the at least one terminal device paged by the network device.

S1202: The network device sends third indication information. Correspondingly, the terminal device receives the third indication information from the network device.

In a possible implementation, the third indication information indicates that last K random access occasions in the N random access occasions are used by the first-type terminal device to initiate random access. K is a positive integer less than or equal to N. Further, the third indication information may indicate that first N-K random access occasions in the N random access occasions are used by the second-type terminal device to initiate random access.

For example, N is equal to 10 and K is equal to 3. As shown in FIG. 13, first seven random access occasions in the 10 random access occasions may be used by the second-type terminal device, and last three random access occasions may be used by the first-type terminal device.

Optionally, in the possible implementation, the first-type terminal device may be specifically a terminal device that cannot complete the random access or data transmission after the random access on first M random access occasions in the N random access occasions, where M is a positive integer less than or equal to N-K.

For example, if a terminal device cannot complete the random access or data transmission after the random access on the first M random access occasions in the N random access occasions, when the network device processes random access or data transmission of another terminal device on the first M random access occasions, the network device may provide energy for the terminal device. Therefore, after the M random access occasions, the terminal device may complete the random access or data transmission after the random access. Therefore, when the network device provides the last K random access occasions in the N random access occasions for the first-type terminal device, the first-type terminal device may complete random access or data transmission on the last K random access occasions.

Optionally, a ratio of K to N may be fixed. To be specific, when the value of N changes, a value of K also changes accordingly, so that the ratio of K to N is fixed. Alternatively, a value of K may be fixed. To be specific, when the value of N changes, the value of K remains unchanged. Alternatively, a value of K may be predefined in a protocol or preconfigured. Alternatively, a value of K may be determined based on a quantity of terminal devices located at an edge of a coverage area of the network device. For example, the value of K may be equal to the quantity of terminal devices located at the edge of the coverage area. Alternatively, before the method shown in FIG. 12 is performed, the method shown in FIG. 8 may be performed. In this case, the network device may determine a value of K based on a quantity of pieces of received first indication information. For example, the value of K may be equal to the quantity of pieces of received first indication information.

Optionally, in the possible implementation, the third indication information may include the value of K. Alternatively, the third indication information may include the ratio of K to N. Alternatively, if the value of K is preconfigured or predefined in the protocol, the third indication information may be an indication of one bit. When a value of the bit is 1 (or 0), it indicates that the last K random access occasions in the N random access occasions are used by the first-type terminal device to initiate random access. Alternatively, when a plurality of values of K or a plurality of ratios of K to N are specified in the protocol, the third indication information may indicate an index corresponding to one of the plurality of values or ratios.

In another possible implementation, the third indication information indicates that the N random access occasions are used by the second-type terminal device to initiate random access.

Optionally, after determining that the second-type terminal device completes random access on the N random access occasions, the network device may send third signaling. The third signaling may indicate the first-type terminal device to initiate random access, or the third signaling may be used to configure a random access occasion for the first-type terminal device. For example, an implementation of the third signaling may be the same as or similar to an implementation of a select command, a query command, or a QueryRep command. For details, refer to related descriptions of the foregoing three commands. Details are not described herein again.

Optionally, on the N random access occasions, the network device may provide energy for the first-type terminal device in a process of processing random access or data transmission of the second-type terminal device. Therefore, after the N random access occasions, when the first-type terminal device receives the third signaling, the first-type terminal device may complete the random access or data transmission after the random access.

In still another possible implementation, the third indication information indicates that the N random access occasions are used by the first-type terminal device to initiate random access.

Optionally, in the possible implementation, the first-type terminal device may be specifically a terminal device that cannot complete the random access or data transmission after the random access before the N random access occasions.

Optionally, before step S1201 or S1202, the network device may determine whether the first-type terminal device exists in a coverage area of the network device. If the first-type terminal device exists, the network device may send the third indication information to indicate a random access occasion to the first-type terminal device.

Optionally, from a time point at which the network device determines that the first-type terminal device exists to a time point at which the network device sends the third indication information, the network device may provide energy for the first-type terminal device. Therefore, when the N random access occasions indicated by the second indication information arrive, the first-type terminal device may complete the random access or data transmission after the random access.

Optionally, for the last two possible implementations, the third indication information may be an indication of one bit. When a value of the bit is a first value, it indicates that the N random access occasions are used by the second-type terminal device to initiate random access. When a value of the bit is a second value, it indicates that the N random access occasions are used by the first-type terminal device to initiate random access.

For example, the first value may be 1, and correspondingly, the second value is 0; or the first value may be 0, and correspondingly, the second value is 1. This is not specifically limited in this application.

For the foregoing three possible implementations, the network device may send the third indication information when the first-type terminal device exists in the coverage area of the network device. Alternatively, the network device may send the third indication information when the coverage area of the network device is large. Alternatively, the network device may send the third indication information when a terminal device that cannot complete uplink transmission exists in the coverage area of the network device.

Optionally, the network device may determine, based on a historical paging record of the terminal device, that the first-type terminal device exists in the coverage area of the network device. For example, before the method shown in FIG. 12, the network device may perform the method shown in FIG. 8. If the network device receives the first indication information in an execution process of the method shown in FIG. 8, the network device may determine that the first-type terminal device exists in the coverage area of the network device. For another example, before the method shown in FIG. 12, the network device may page a terminal device, to indicate the terminal device to perform random access. If the network device receives, on a random access occasion in the process, no random number, no EPC, or the like sent by the terminal device, the network device may determine that the first-type terminal device exists in the coverage area of the network device. For an implementation in which the network device determines that the terminal device that cannot complete uplink transmission exists, refer to related descriptions of determining that the first-type terminal device exists. Details are not described herein again.

Optionally, the second indication information and the third indication information may be carried in same signaling, for example, may both be carried in a select command or a query command. Alternatively, the second indication information and the third indication information may be carried in different signaling. This is not specifically limited in this application.

It should be noted that there is no strict execution sequence between the foregoing step S1201 and step S1202, and step S1201 may be performed before step S1202. Alternatively, step S1202 may be performed before step S1201. Alternatively, step S1201 and step S1202 may be simultaneously performed. This is not specifically limited in this application.

S1203: The terminal device initiates random access based on the second indication information and the third indication information.

Optionally, after receiving the second indication information and the third indication information, the terminal device may determine a third random access occasion. Then, random access is initiated on the third random access occasion.

In a possible implementation, when the third indication information indicates that the last K random access occasions in the N random access occasions are used by the first-type terminal device to initiate random access, if the terminal device is the first-type terminal device, the third random access may be one of the last K random access occasions; or if the terminal device is the second-type terminal device, the third random access occasion may be one of the first M random access occasions in the N random access occasions.

Optionally, in the possible implementation, whether the terminal device is the first-type terminal device or the second-type terminal device may be autonomously determined by the terminal device. For example, when the third indication information is received, if stored energy of the terminal device is insufficient, residual energy is less than or equal to the first threshold, received power of the third indication information is less than or equal to the second threshold, a charging/discharging capability of the terminal device is low, or a charging/discharging speed of the terminal device is low, the terminal device may be the first-type terminal device. Alternatively, if stored energy of the terminal device is sufficient, residual energy is greater than or equal to the first threshold, received power of the third indication information is greater than or equal to the second threshold, a charging/discharging capability of the terminal device is high, or a charging/discharging speed of the terminal device is high, the terminal device may be the second-type terminal device.

In another possible implementation, when the third indication information indicates that the N random access occasions are used by the second-type terminal device to initiate random access, and the terminal device is the second-type terminal device, the third random access occasion is one of the N random access occasions.

Optionally, in the possible implementation, when the terminal device receives the third indication information, if stored energy of the terminal device is sufficient, residual energy is greater than or equal to the first threshold, or received power of the third indication information is greater than or equal to the second threshold, the terminal device may be the second-type terminal device.

In still another possible implementation, when the third indication information indicates that the N random access occasions are used by the first-type terminal device to initiate random access, and the terminal device is the first-type terminal device, the third random access occasion is one of the N random access occasions.

Optionally, in the possible implementation, when receiving the third indication information, the terminal device may determine whether a power failure, a random access failure, or a failure of data transmission after random access occurs in a paging process and a random access process that are performed before the terminal device receives the third indication information. If the power failure, the random access failure, or the failure of data transmission after random access occurs, it may be determined that the terminal device is the first-type terminal device, so that the third random access occasion can be selected from the N random access occasions to initiate random access.

Based on the foregoing solution, the network device may configure a later random access occasion for the first-type terminal device, and correspondingly, may configure an earlier random access occasion for the second-type terminal device. Therefore, the second-type terminal device can access the network as early as possible, and time for waiting for the first-type terminal device to perform access or send data is reduced, thereby reducing an unnecessary waste of time domain resources. In addition, the later random access is configured for the first-type terminal device, so that the network device can provide energy for the first-type terminal device when processing random access of the second-type terminal device on the earlier random access occasion, to increase a possibility that the first-type terminal device successfully performs access on the later random access occasion, and further increase an access success rate of the first-type terminal device.

Alternatively, the network device may centrally configure the N random access occasions for the second-type terminal device, so that the second-type terminal device initiates random access on the N random access occasions without waiting for random access of the first-type terminal device to time out, to access the network as early as possible and reduce the unnecessary waste of the time domain resources.

Alternatively, the network device may centrally configure the N random access occasions for the first-type terminal device, so that a terminal device that cannot complete random access before the N random access occasions can initiate random access on the N random access occasions again, to increase an access success rate of the terminal device.

In the methods shown in FIG. 8 and FIG. 12, processing in a scenario in which the stored energy of the terminal device is insufficient is implemented by exchanging the indication information between the terminal device and the network device. In addition, this application further provides a communication method. In the method, a network device mainly performs related processing. As shown in FIG. 14, the method includes the following steps.

S1401: The network device sends first information and second information. Correspondingly, a terminal device receives the first information and the second information from the network device.

The first information is used to page at least one terminal device. The second information indicates a maximum quantity N of random access occasions, the maximum quantity of random access occasions indicates N random access occasions, and N is a positive integer. For the maximum quantity N of random access occasions and the random access occasion, refer to the foregoing related descriptions. Details are not described herein again.

Optionally, a receiver of the first information may be a terminal device in a coverage area of the network device. A receiver of the second information may be the at least one terminal device paged in the coverage area of the network device.

Optionally, the first information and the second information may be carried in same signaling, or may be carried in different signaling. This is not specifically limited in this application.

Optionally, after receiving the first information and the second information, the terminal device paged by the network device may select a random access occasion from the N random access occasions, and initiate random access on the random access occasion selected by the terminal device. When processing, on the N random access occasions, random access or data transmission initiated by the terminal device, the network device may determine whether a first-type terminal device exists in the at least one terminal device paged by the network device. The first-type terminal device may be a terminal device that cannot complete the random access or data transmission after the random access on the N random access occasions.

Optionally, that the terminal device cannot complete the random access or data transmission after the random access may include at least one of the following: Stored energy of the terminal device is insufficient, residual energy of the terminal device is less than or equal to a first threshold, signal received power of the terminal device is less than or equal to a second threshold, or a quantity of times of repeated data transmission of the terminal device is greater than or equal to a third threshold.

In a possible implementation, the network device may determine, when a first case occurs, that the first-type terminal device exists. For example, the first case may be that uplink data or uplink signaling to be transmitted by the terminal device exists in the at least one terminal device paged by the network device, but the network device receives no uplink data or uplink signaling. Further, when a quantity of times that the first case occurs is greater than a threshold, the network device may determine that the first-type terminal device exists.

For example, the uplink data or the uplink signaling may be necessary uplink data or uplink signaling when the terminal device accesses a network (or in a random access process). For example, the uplink signaling may be signaling or a random access message that carries a random number, and the uplink data may be uplink data triggered by using an EPC or other downlink signaling or data. Because the uplink data or the uplink signaling is necessary when the terminal device accesses the network, the network device may learn that the terminal device needs to send the uplink data or the uplink signaling. Therefore, when the network device receives no uplink data or uplink signaling on the random access occasion, the network device may determine that the first-type terminal device exists.

Alternatively, for example, the uplink data or the uplink signaling may be a response to downlink data or downlink signaling sent by the network device. Therefore, after sending the downlink data or the downlink signaling, the network device may learn that the terminal device needs to send the uplink data or the uplink signaling. Therefore, when the network device receives no uplink data or uplink signaling on the random access occasion, the network device may determine that the first-type terminal device exists.

In another possible implementation, before step S1401, the method shown in FIG. 8 may be performed. If the network device receives first indication information in an execution process of the method shown in FIG. 8, the network device may determine that the first-type terminal device exists.

If the first-type terminal device exists in the at least one terminal device paged by the network device, the network device performs the following step S1402.

S1402: The network device sends an excitation signal. Correspondingly, the terminal device receives the excitation signal from the network device. The excitation signal is used to provide energy.

For example, the excitation signal is used to provide energy for a terminal device in a coverage area of the network device. The terminal device in the coverage area may store the energy by using the excitation signal.

Optionally, the excitation signal may be a monophonic signal, a continuous wave, or the like. The excitation signal may be further used to provide a carrier for the terminal device.

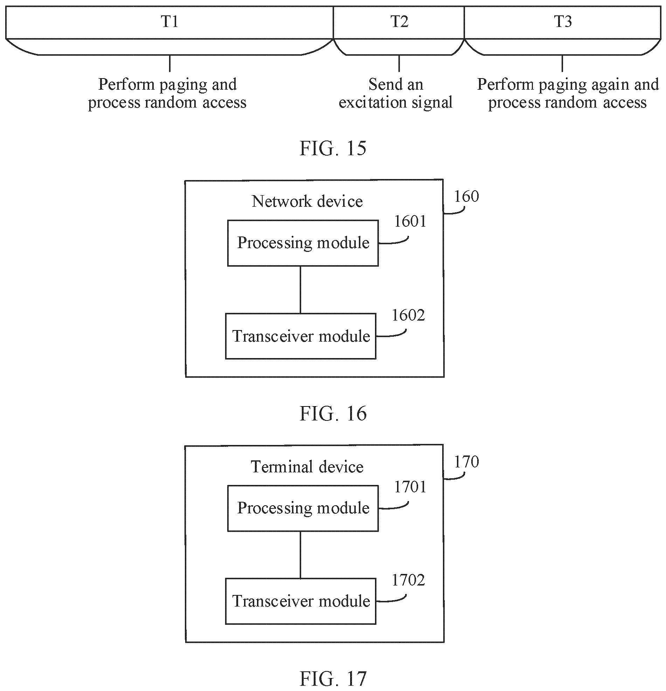

Optionally, after sending the excitation signal for a period of time, the network device may attempt to page the terminal device again to access a network. For example, as shown in FIG. 15, in a time period T1, the network device may indicate the N random access occasions and page the at least one terminal device. When the first-type terminal device exists in the at least one terminal device, in a time period T2, the network device may send the excitation signal to provide energy for the terminal device. Then, in a time period T3, the network device may perform paging again, process random access of the terminal device, and the like. It should be noted that, in the time period T3, the network device may still provide energy for the terminal device. However, in comparison with the time period T2, in the time period T3, less energy is provided, and a charging amount of the terminal device in a unit time is smaller.

Optionally, duration (for example, the time period T2 shown in FIG. 15) in which the network device sends the excitation signal may be greater than or equal to T or greater than or equal to X multiplied by T. X is a positive integer greater than 1, for example, 5 or 10. T is shortest time or longest time for successfully completing communication (random access and subsequent data transmission) corresponding to one terminal device in current paging or random access triggering (for example, in the time period T1 shown in FIG. 15).

Optionally, after sending the excitation signal for a period of time, the network device may send fourth signaling. For example, the fourth signaling may be sent in the time period T2 shown in FIG. 15. The fourth signaling may be used to query whether an electricity quantity of the terminal device in the coverage area of the network device is sufficient, or used to query whether the first-type terminal device can complete a normal communication procedure (for example, random access, or random access and subsequent data transmission).

Optionally, a terminal device that receives the fourth signaling may feed back, to the network device based on a status of the electricity quantity of the terminal device, an indication indicating that the electricity quantity is sufficient (or charging is completed) or the like, or feed back, to the network device, that an energy storage procedure is not completed or charging is not completed, to indicate that the terminal device cannot complete random access or subsequent data transmission. After receiving feedback from the terminal device, the network device may determine, based on the feedback, whether to continue to send the excitation signal. For example, if the terminal device feeds back that the electricity quantity is sufficient (or the charging is completed), the network device may stop sending the excitation signal; or if the terminal device feeds back that the energy storage procedure is not completed or the charging is not completed, the network device may continue to send the excitation signal. After the excitation signal is sent, the network device may attempt to page the terminal device again to access the network.

Optionally, the terminal device paged by the network device again may include the first-type terminal device that exists before the excitation signal is sent. The first-type terminal device may store energy by receiving the excitation signal. When the excitation signal is sent, the first-type terminal device may store sufficient energy. Therefore, when the network device performs paging again, the first-type terminal device may complete the random access or data transmission after the random access.

Optionally, when the network device attempts to page the terminal device again, information about a flag bit (for example, a type and a state of an inventoried flag bit) carried in sent signaling used for paging is the same as information about a flag bit carried in signaling that is used for paging and that is sent before the excitation signal. Because a terminal device that has successfully performed access toggles a state of a flag bit of the terminal device, in this scenario, signaling that is used for paging and that is sent by the network device again is not for re-paging the terminal device that has successfully performed access, but is for paging a terminal device (for example, the first-type terminal device) that has not performed access before. In this way, complete paging of the terminal device in the coverage area of the network device is implemented.

Optionally, when attempting to perform paging again, the network device may configure the maximum quantity of random access occasions based on the quantity of times that the first case occurs.

Optionally, when the network device attempts to perform paging again, if determining that the first-type terminal device still exists in the terminal device paged by the network device, the network device may perform the foregoing step S 1402 again. For example, if in the time period T3, the network device determines that the first-type terminal device still exists, the network device may continue to send the excitation signal in a time period (denoted as T4) after T3. After T4, the network device may attempt to perform paging again.

Based on this solution, when finding that the first-type terminal device that cannot complete the random access or data transmission after the random access exists in the terminal device paged by the network device, the network device may send the excitation signal, to provide energy for the terminal device. In this way, the first-type terminal device can store energy by using the excitation signal, to complete subsequent random access or data transmission, so as to increase an access success rate of the first-type terminal device.

Optionally, before the method shown in FIG. 8, FIG. 12, or FIG. 14 starts, the network device may first send the excitation signal to provide energy for the terminal device, and then perform the foregoing methods. For example, the duration in which the network device sends the excitation signal may be in a unit of seconds. For example, the duration for sending the excitation signal may be 1 second to 99 seconds.

In some embodiments, the actions of the network device may alternatively be implemented by a device in a form of the terminal device. In other words, interaction between the network device and the terminal device may alternatively be implemented through interaction between terminal devices. In this case, a terminal device that implements the actions of the network device may be used as a reader, or may implement a function of the reader.

It may be understood that, in the foregoing embodiments, the methods and/or the steps implemented by the network device may alternatively be implemented by a component (for example, a processor, a chip, a chip system, a circuit, a logical module, or software such as a chip or a circuit) that can be used in the network device; and the methods and/or the steps implemented by the terminal device may alternatively be implemented by a component (for example, a processor, a chip, a chip system, a circuit, a logical module, or software such as a chip or a circuit) that can be used in the terminal device.

The foregoing mainly describes the solutions provided in this application. Correspondingly, this application further provides a communication apparatus, and the communication apparatus is configured to implement the foregoing methods. The communication apparatus may be the network device in the foregoing method embodiments, or an apparatus including the foregoing network device, or a component that can be used in the network device, for example, a chip or a chip system. Alternatively, the communication apparatus may be the terminal device in the foregoing method embodiments, or an apparatus including the foregoing terminal device, or a component that can be used in the terminal device, for example, a chip or a chip system.

It may be understood that, to implement the foregoing functions, the communication apparatus includes a corresponding hardware structure and/or a corresponding software module for performing each function. A person skilled in the art should be easily aware that units and algorithm steps in the examples described with reference to embodiments disclosed in this specification can be implemented in a form of hardware or a combination of hardware and computer software in this application. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example, and is merely logical function division. During actual implementation, another division manner may be used.

Optionally, that the communication apparatus is the network device in the foregoing method embodiments is used as an example. FIG. 16 is a diagram of a structure of a network device 160. The network device 160 includes a processing module 1601 and a transceiver module 1602.

In some embodiments, the network device 160 may further include a storage module (not shown in FIG. 16), configured to store program instructions and data.

In some embodiments, the transceiver module 1602 may also be referred to as a transceiver unit, and is configured to implement a sending function and/or a receiving function. The transceiver module 1602 may include a transceiver circuit, a transceiver machine, a transceiver, or a communication interface.

In some embodiments, the transceiver module 1602 may include a receiving module and a sending module that are respectively configured to perform the receiving and sending steps performed by the network device in the foregoing method embodiments, and/or configured to support another process of the technology described in this specification. The processing module 1601 may be configured to perform the processing (for example, determining or generation) steps performed by the network device in the foregoing method embodiments, and/or configured to support another process of the technology described in this specification.

In a possible design:
The processing module 1601 is configured to send first signaling by using the transceiver module 1602, where the first signaling indicates a terminal device to initiate random access on a first random access occasion;
the processing module 1601 is further configured to receive first indication information from a first terminal device by using the transceiver module 1602, where the first indication information indicates that the first terminal device cannot complete the random access or data transmission after the random access; and
the processing module 1601 is further configured to send second signaling by using the transceiver module 1602, where the second signaling indicates the terminal device to initiate random access on a second random access occasion, and the second random access occasion is a next random access occasion after the first random access occasion.

Optionally, that the first indication information indicates that the first terminal device cannot complete the random access or data transmission after the random access includes at least one of the following: The first indication information indicates that stored energy of the first terminal device is insufficient; the first indication information indicates that residual energy of the first terminal device is less than or equal to a first threshold; the first indication information indicates that signal received power of the first terminal device is less than or equal to a second threshold; or the first indication information indicates that a quantity of times of repeated data transmission of the first terminal device is greater than or equal to a third threshold.

Optionally, the processing module 1601 is further configured to receive a random number from the first terminal device by using the transceiver module 1602, where the random number is used to initiate the random access.

Optionally, the processing module 1601 is further configured to determine, based on the first indication information, not to send response information to the first terminal device.

In another possible design:
The processing module 1601 is configured to send second indication information by using the transceiver module 1602, where the second indication information indicates a maximum quantity N of random access occasions, the maximum quantity of random access occasions indicates N random access occasions, and N is a positive integer; and
the processing module 1601 is further configured to send third indication information by using the transceiver module 1602, where the third indication information indicates that last K random access occasions in the N random access occasions are used by a first-type terminal device to initiate random access, and K is a positive integer less than N; the third indication information indicates that the N random access occasions are used by a second-type terminal device to initiate random access; or the third indication information indicates that the N random access occasions are used by a first-type terminal device to initiate random access.

Optionally, the first-type terminal device is a terminal device that cannot complete the random access or data transmission after the random access.

Optionally, when the third indication information indicates that the last K random access occasions in the N random access occasions are used by the first-type terminal device to initiate random access, the first-type terminal device is a terminal device that cannot complete the random access or data transmission after the random access on first M random access occasions in the N random access occasions, where M is a positive integer less than or equal to N-K.

Optionally, that the random access or data transmission after the random access cannot be completed includes at least one of the following: Stored energy of the terminal device is insufficient, residual energy of the terminal device is less than or equal to a first threshold, signal received power of the terminal device is less than or equal to a second threshold, or a quantity of times of repeated data transmission of the terminal device is greater than or equal to a third threshold.

Optionally, the second-type terminal device includes at least one of the following: a terminal device that can complete the random access or data transmission after the random access; a terminal device with sufficient stored energy; a terminal device whose residual energy is greater than or equal to the first threshold; a terminal device whose signal received power is greater than or equal to the second threshold; or a terminal device whose quantity of times of repeated data transmission is less than or equal to the third threshold.

Optionally, the second indication information and the third indication information are carried in same signaling.

Optionally, when the third indication information indicates that the N random access occasions are used by the second-type terminal device to initiate random access, the processing module 1601 is further configured to send third signaling by using the transceiver module 1602 after determining that the second-type terminal device completes random access on the N random access occasions, where the third signaling indicates the first-type terminal device to initiate random access.

In still another possible design:
The processing module 1601 is configured to send first information and second information by using the transceiver module 1602, where the first information is used to page at least one terminal device, the second information indicates a maximum quantity N of random access occasions, the maximum quantity of random access occasions indicates N random access occasions, and N is a positive integer; and
the processing module 1601 is further configured to: when a first-type terminal device exists in the at least one paged terminal device, send an excitation signal by using the transceiver module 1602, where the excitation signal is used to provide energy. The first-type terminal device is a terminal device that cannot complete the random access or data transmission after the random access on the N random access occasions.

Optionally, that the first-type terminal device exists in the at least one terminal device includes: Uplink data or uplink signaling to be transmitted by the terminal device exists in the at least one terminal device, but the network device receives no uplink data or uplink signaling.

Optionally, that the random access or data transmission after the random access cannot be completed includes at least one of the following: Stored energy of the terminal device is insufficient, residual energy of the terminal device is less than or equal to a first threshold, signal received power of the terminal device is less than or equal to a second threshold, or a quantity of times of repeated data transmission of the terminal device is greater than or equal to a third threshold.

All related content of the steps in the foregoing method embodiments may be cited in function descriptions of corresponding functional modules. Details are not described herein again.

Optionally, in this application, that the processing module receives/sends information by using the transceiver module may also be understood as that the processing module controls the transceiver module to receive/send information. Alternatively, that the processing module sends information by using the transceiver module may be understood as that the processing module outputs information to the transceiver module, and the transceiver module sends the information; and that the processing module receives information by using the transceiver module may be understood as that the transceiver module receives information and inputs the information to the processing module.

In this application, the network device 160 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in hardware implementation, a person skilled in the art may figure out that the network device 160 may be in a form of the communication apparatus 700 shown in FIG. 7.

In an example, a function/an implementation process of the processing module 1601 in FIG. 16 may be implemented by using the processor 701 in the communication apparatus 700 shown in FIG. 7 by invoking computer-executable instructions stored in the memory 703. A function/an implementation process of the transceiver module 1602 in FIG. 16 may be implemented through the communication interface 704 in the communication apparatus 700 shown in FIG. 7.

**In** some embodiments, when the network device 160 in FIG. 16 is a chip or a chip system, the function/the implementation process of the transceiver module 1602 may be implemented through an input/output interface (or a communication interface) of the chip or the chip system, the function/the implementation process of the processing module 1601 may be implemented by using a processor (or a processing circuit) of the chip or the chip system.

The network device 160 provided in this embodiment may perform the foregoing methods. Therefore, for technical effects that can be achieved by the network device 160, refer to the foregoing method embodiments. Details are not described herein again.

Optionally, that the communication apparatus is the terminal device in the foregoing method embodiments is used as an example. FIG. 17 is a diagram of a structure of a first terminal device 70. The first terminal device 70 includes a processing module 1701 and a transceiver module 1702.

**In** some embodiments, the first terminal device 70 may further include a storage module (not shown in FIG. 17), configured to store program instructions and data.

**In** some embodiments, the transceiver module 1702 may also be referred to as a transceiver unit, and is configured to implement a sending function and/or a receiving function. The transceiver module 1702 may include a transceiver circuit, a transceiver machine, a transceiver, or a communication interface.

**In** some embodiments, the transceiver module 1702 may include a receiving module and a sending module that are respectively configured to perform the receiving and sending steps performed by the terminal device in the foregoing method embodiments, and/or configured to support another process of the technology described in this specification. The processing module 1701 may be configured to perform the processing (for example, determining or generation) steps performed by the terminal device in the foregoing method embodiments, and/or configured to support another process of the technology described in this specification.

In a possible design:
The processing module 1701 is configured to receive first signaling from a network device by using the transceiver module 1702, where the first signaling indicates the terminal device to initiate random access on a first random access occasion; and
the processing module 1701 is further configured to send first indication information to the network device by using the transceiver module 1702, where the first indication information indicates that a first terminal device cannot complete the random access or data transmission after the random access.

Optionally, that the first indication information indicates that a first terminal device cannot complete the random access or data transmission after the random access includes at least one of the following: The first indication information indicates that stored energy of the first terminal device is insufficient; the first indication information indicates that residual energy of the first terminal device is less than or equal to a first threshold; the first indication information indicates that signal received power of the first terminal device is less than or equal to a second threshold; or the first indication information indicates that a quantity of times of repeated data transmission of the first terminal device is greater than or equal to a third threshold.

In another possible design:
The processing module 1701 is configured to receive second indication information from a network device by using the transceiver module 1702, where the second indication information indicates a maximum quantity N of random access occasions, the maximum quantity of random access occasions indicates N random access occasions, and N is a positive integer;
the processing module 1701 is configured to receive third indication information from the network device by using the transceiver module 1702, where the third indication information indicates that last K random access occasions in the N random access occasions are used by a first-type terminal device to initiate random access, and K is a positive integer less than or equal to N; the third indication information indicates that the N random access occasions are used by a second-type terminal device to initiate random access; or the third indication information indicates that the N random access occasions are used by a first-type terminal device to initiate random access; and
the processing module 1701 is further configured to initiate random access based on the second indication information and the third indication information by using the transceiver module 1702.

Optionally, that the processing module 1701 is configured to initiate random access based on the second indication information and the third indication information includes: The processing module 1701 is configured to initiate the random access on a third random access occasion by using the transceiver module 1702.

When the third indication information indicates that the last K random access occasions in the N random access occasions are used by the first-type terminal device to initiate random access, and a terminal device is the first-type terminal device, the third random access occasion is one of the last K random access occasions.

When the third indication information indicates that the N random access occasions are used by the first-type terminal device or the second-type terminal device to initiate random access, the third random access occasion is one of the N random access occasions.

All related content of the steps in the foregoing method embodiments may be cited in function descriptions of corresponding functional modules. Details are not described herein again.

In this application, the first terminal device 70 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in hardware implementation, a person skilled in the art may figure out that the first terminal device 70 may be in a form of the communication apparatus 700 shown in FIG. 7.

In an example, a function/an implementation process of the processing module 1701 in FIG. 17 may be implemented by using the processor 701 in the communication apparatus 700 shown in FIG. 7 by invoking computer-executable instructions stored in the memory 703. A function/an implementation process of the transceiver module 1702 in FIG. 17 may be implemented through the communication interface 704 in the communication apparatus 700 shown in FIG. 7.

In some embodiments, when the first terminal device 70 in FIG. 17 is a chip or a chip system, the function/the implementation process of the transceiver module 1702 may be implemented through an input/output interface (or a communication interface) of the chip or the chip system, the function/the implementation process of the processing module 1701 may be implemented by using a processor (or a processing circuit) of the chip or the chip system.

The first terminal device 70 provided in this embodiment may perform the foregoing methods. Therefore, for technical effects that can be achieved by the first terminal device 70, refer to the foregoing method embodiments. Details are not described herein again.

In a possible product form, the access network device or the terminal device in embodiments of this application may be implemented by using one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described in this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and necessary data. The computer program may include instructions, and the processor may invoke the instructions in the computer program stored in the memory, to instruct the communication apparatus to perform the method in any one of the foregoing method embodiments. Certainly, the memory may alternatively not be located in the communication apparatus.

In another possible implementation, the communication apparatus further includes an interface circuit. The interface circuit is a code/data read/write interface circuit, and the interface circuit is configured to: receive computer-executable instructions (where the computer-executable instructions are stored in the memory, may be directly read from the memory, or may pass through another component), and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, a function of any one of the foregoing method embodiments is implemented.

This application further provides a computer program product. When the computer program product is executed by a computer, a function of any one of the foregoing method embodiments is implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may be or may not be physically separate, that is, may be located in one location, or may be distributed on a plurality of network units. Parts displayed as units may be or may not be physical units. A part or all of the units may be selected based on actual requirements to achieve objectives of the solutions of embodiments.

In addition, functional units in embodiments of this application may be integrated into one processing unit, each of the units may exist alone physically, or two or more units may be integrated into one unit.

All or some of the foregoing embodiments may be implemented by software, hardware, firmware, or any combination thereof. When a software program is used for implementation, all or some of the foregoing embodiments may be implemented in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device that is integrated by one or more usable media, such as a server or a data center. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. A communication method, wherein the method comprises:
sending first signaling, wherein the first signaling indicates a terminal device to initiate random access on a first random access occasion;
receiving first indication information from a first terminal device, wherein the first indication information indicates that the first terminal device cannot complete the random access or data transmission after the random access; and
sending second signaling, wherein the second signaling indicates the terminal device to initiate random access on a second random access occasion, and the second random access occasion is a next random access occasion after the first random access occasion.

2. The method according to claim 1, wherein that the first indication information indicates that the first terminal device cannot complete the random access or data transmission after the random access comprises at least one of the following:
the first indication information indicates that stored energy of the first terminal device is insufficient;
the first indication information indicates that residual energy of the first terminal device is less than or equal to a first threshold;
the first indication information indicates that signal received power of the first terminal device is less than or equal to a second threshold; or
the first indication information indicates that a quantity of times of repeated data transmission of the first terminal device is greater than or equal to a third threshold.

3. The method according to claim 1 or 2, wherein before the sending second signaling, the method further comprises:
receiving a random number from the first terminal device, wherein the random number is used to initiate the random access.

4. The method according to claim 3, wherein the random number and the first indication information are carried in same signaling.

5. The method according to any one of claims 1 to 4, wherein the method further comprises:
determining, based on the first indication information, not to send response information to the first terminal device.

6. A communication method, wherein the method comprises:
receiving first signaling from a network device, wherein the first signaling indicates a terminal device to initiate random access on a first random access occasion; and
sending first indication information to the network device, wherein the first indication information indicates that a first terminal device cannot complete the random access or data transmission after the random access.

7. The method according to claim 6, wherein that the first indication information indicates that a first terminal device cannot complete the random access or data transmission after the random access comprises at least one of the following:
the first indication information indicates that stored energy of the first terminal device is insufficient;
the first indication information indicates that residual energy of the first terminal device is less than or equal to a first threshold;
the first indication information indicates that signal received power of the first terminal device is less than or equal to a second threshold; or
the first indication information indicates that a quantity of times of repeated data transmission of the first terminal device is greater than or equal to a third threshold.

8. A communication method, wherein the method comprises:
sending second indication information, wherein the second indication information indicates a maximum quantity N of random access occasions, the maximum quantity of random access occasions indicates N random access occasions, and N is a positive integer; and
sending third indication information, wherein the third indication information indicates that last K random access occasions in the N random access occasions are used by a first-type terminal device to initiate random access, and K is a positive integer less than N;
the third indication information indicates that the N random access occasions are used by a second-type terminal device to initiate random access; or
the third indication information indicates that the N random access occasions are used by a first-type terminal device to initiate random access.

9. The method according to claim 8, wherein the first-type terminal device is a terminal device that cannot complete the random access or data transmission after the random access.

10. The method according to claim 9, wherein when the third indication information indicates that the last K random access occasions in the N random access occasions are used by the first-type terminal device to initiate random access, the first-type terminal device is:
a terminal device that cannot complete the random access or data transmission after the random access on first M random access occasions in the N random access occasions, wherein M is a positive integer less than or equal to N-K.

11. The method according to claim 9 or 10, wherein that the random access or data transmission after the random access cannot be completed comprises at least one of the following:
stored energy of the terminal device is insufficient;
residual energy of the terminal device is less than or equal to a first threshold;
signal received power of the terminal device is less than or equal to a second threshold; or
a quantity of times of repeated data transmission of the terminal device is greater than or equal to a third threshold.

12. The method according to any one of claims 8 to 11, wherein the second-type terminal device comprises at least one of the following:
a terminal device that can complete the random access or data transmission after the random access;
a terminal device with sufficient stored energy;
a terminal device whose residual energy is greater than or equal to the first threshold;
a terminal device whose signal received power is greater than or equal to the second threshold; or
a terminal device whose quantity of times of repeated data transmission is less than or equal to the third threshold.

13. The method according to any one of claims 8 to 12, wherein the second indication information and the third indication information are carried in same signaling.

14. The method according to any one of claims 8 to 13, wherein when the third indication information indicates that the N random access occasions are used by the second-type terminal device to initiate random access, the method further comprises:
sending third signaling after determining that the second-type terminal device completes random access on the N random access occasions, wherein the third signaling indicates the first-type terminal device to initiate random access.

15. A communication method, wherein the method comprises:
receiving second indication information from a network device, wherein the second indication information indicates a maximum quantity N of random access occasions, the maximum quantity of random access occasions indicates N random access occasions, and N is a positive integer;
receiving third indication information from the network device, wherein the third indication information indicates that last K random access occasions in the N random access occasions are used by a first-type terminal device to initiate random access, and K is a positive integer less than or equal to N; the third indication information indicates that the N random access occasions are used by a second-type terminal device to initiate random access; or the third indication information indicates that the N random access occasions are used by a first-type terminal device to initiate random access; and
initiating random access based on the second indication information and the third indication information.

16. The method according to claim 15, wherein the initiating random access based on the second indication information and the third indication information comprises: initiating the random access on a third random access occasion, wherein
when the third indication information indicates that the last K random access occasions in the N random access occasions are used by the first-type terminal device to initiate random access, and a terminal device is the first-type terminal device, the third random access occasion is one of the last K random access occasions; or
when the third indication information indicates that the N random access occasions are used by the first-type terminal device or the second-type terminal device to initiate random access, the third random access occasion is one of the N random access occasions.

17. A communication apparatus, wherein the communication apparatus comprises a processing module and a transceiver module, wherein
the processing module is configured to send first signaling by using the transceiver module, wherein the first signaling indicates a terminal device to initiate random access on a first random access occasion;
the processing module is further configured to receive first indication information from a first terminal device by using the transceiver module, wherein the first indication information indicates that the first terminal device cannot complete the random access or data transmission after the random access; and
the processing module is further configured to send second signaling by using the transceiver module, wherein the second signaling indicates the terminal device to initiate random access on a second random access occasion, and the second random access occasion is a next random access occasion after the first random access occasion.

18. The communication apparatus according to claim 17, wherein that the first indication information indicates that the first terminal device cannot complete the random access or data transmission after the random access comprises at least one of the following:
the first indication information indicates that stored energy of the first terminal device is insufficient;
the first indication information indicates that residual energy of the first terminal device is less than or equal to a first threshold;
the first indication information indicates that signal received power of the first terminal device is less than or equal to a second threshold; or
the first indication information indicates that a quantity of times of repeated data transmission of the first terminal device is greater than or equal to a third threshold.

19. The communication apparatus according to claim 17 or 18, wherein the processing module is further configured to receive a random number from the first terminal device by using the transceiver module, wherein the random number is used to initiate the random access.

20. The communication apparatus according to claim 19, wherein the random number and the first indication information are carried in same signaling.

21. The communication apparatus according to any one of claims 17 to 20, wherein the processing module is further configured to determine, based on the first indication information, not to send response information to the first terminal device.

22. A communication apparatus, wherein the communication apparatus comprises a processing module and a transceiver module, wherein
the processing module is configured to receive first signaling from a network device by using the transceiver module, wherein the first signaling indicates a terminal device to initiate random access on a first random access occasion; and
the processing module is further configured to send first indication information to the network device by using the transceiver module, wherein the first indication information indicates that the communication apparatus cannot complete the random access or data transmission after the random access.

23. The communication apparatus according to claim 22, wherein that the first indication information indicates that the communication apparatus cannot complete the random access or data transmission after the random access comprises at least one of the following:
the first indication information indicates that stored energy of the communication apparatus is insufficient;
the first indication information indicates that residual energy of the communication apparatus is less than or equal to a first threshold;
the first indication information indicates that signal received power of the communication apparatus is less than or equal to a second threshold; or
the first indication information indicates that a quantity of times of repeated data transmission of the communication apparatus is greater than or equal to a third threshold.

24. A communication apparatus, wherein the communication apparatus comprises a processing module and a transceiver module, wherein
the processing module is configured to send second indication information by using the transceiver module, wherein the second indication information indicates a maximum quantity N of random access occasions, the maximum quantity of random access occasions indicates N random access occasions, and N is a positive integer; and
the processing module is further configured to send third indication information by using the transceiver module, wherein the third indication information indicates that last K random access occasions in the N random access occasions are used by a first-type terminal device to initiate random access, and K is a positive integer less than N;
the third indication information indicates that the N random access occasions are used by a second-type terminal device to initiate random access; or
the third indication information indicates that the N random access occasions are used by a first-type terminal device to initiate random access.

25. The communication apparatus according to claim 24, wherein the first-type terminal device is a terminal device that cannot complete the random access or data transmission after the random access.

26. The communication apparatus according to claim 25, wherein when the third indication information indicates that the last K random access occasions in the N random access occasions are used by the first-type terminal device to initiate random access, the first-type terminal device is:
a terminal device that cannot complete the random access or data transmission after the random access on first M random access occasions in the N random access occasions, wherein M is a positive integer less than or equal to N-K.

27. The communication apparatus according to claim 25 or 26, wherein that the random access or data transmission after the random access cannot be completed comprises at least one of the following:
stored energy of the terminal device is insufficient;
residual energy of the terminal device is less than or equal to a first threshold;
signal received power of the terminal device is less than or equal to a second threshold; or
a quantity of times of repeated data transmission of the terminal device is greater than or equal to a third threshold.

28. The communication apparatus according to any one of claims 24 to 27, wherein the second-type terminal device comprises at least one of the following:
a terminal device that can complete the random access or data transmission after the random access;
a terminal device with sufficient stored energy;
a terminal device whose residual energy is greater than or equal to the first threshold;
a terminal device whose signal received power is greater than or equal to the second threshold; or
a terminal device whose quantity of times of repeated data transmission is less than or equal to the third threshold.

29. The communication apparatus according to any one of claims 24 to 28, wherein the second indication information and the third indication information are carried in same signaling.

30. The communication apparatus according to any one of claims 24 to 29, wherein when the third indication information indicates that the N random access occasions are used by the second-type terminal device to initiate random access, the processing module is further configured to send third signaling by using the transceiver module after determining that the second-type terminal device completes random access on the N random access occasions, wherein the third signaling indicates the first-type terminal device to initiate random access.

31. A communication apparatus, wherein the communication apparatus comprises a processing module and a transceiver module, wherein
the processing module is configured to receive second indication information from a network device by using the transceiver module, wherein the second indication information indicates a maximum quantity N of random access occasions, the maximum quantity of random access occasions indicates N random access occasions, and N is a positive integer;
the processing module is further configured to receive third indication information from the network device by using the transceiver module, wherein the third indication information indicates that last K random access occasions in the N random access occasions are used by a first-type terminal device to initiate random access, and K is a positive integer less than or equal to N; the third indication information indicates that the N random access occasions are used by a second-type terminal device to initiate random access; or the third indication information indicates that the N random access occasions are used by a first-type terminal device to initiate random access; and
the processing module is further configured to initiate random access based on the second indication information and the third indication information by using the transceiver module.

32. The communication apparatus according to claim 31, wherein the processing module is specifically configured to initiate the random access on a third random access occasion by using the transceiver module, wherein
when the third indication information indicates that the last K random access occasions in the N random access occasions are used by the first-type terminal device to initiate random access, and a terminal device is the first-type terminal device, the third random access occasion is one of the last K random access occasions; or
when the third indication information indicates that the N random access occasions are used by the first-type terminal device or the second-type terminal device to initiate random access, the third random access occasion is one of the N random access occasions.

33. A communication apparatus, wherein the communication apparatus comprises a processor; and the processor is configured to run a computer program or instructions, to enable the communication apparatus to perform the method according to any one of claims 1 to 5, or enable the communication apparatus to perform the method according to any one of claims 8 to 14.

34. A communication apparatus, wherein the communication apparatus comprises a processor; and the processor is configured to run a computer program or instructions, to enable the communication apparatus to perform the method according to claim 6 or 7, or enable the communication apparatus to perform the method according to claim 15 or 16.

35. A computer-readable storage medium, wherein the computer-readable storage medium stores computer instructions or a program, and when the computer instructions or the program is run on a computer, the method according to any one of claims 1 to 5 is performed, or the method according to any one of claims 8 to 14 is performed.

36. A computer-readable storage medium, wherein the computer-readable storage medium stores computer instructions or a program, and when the computer instructions or the program is run on a computer, the method according to claim 6 or 7 is performed, or the method according to claim 15 or 16 is performed.

37. A computer program product, wherein the computer program product comprises computer instructions; and when a part or all of the computer instructions are run on a computer, the method according to any one of claims 1 to 5 is performed, or the method according to any one of claims 8 to 14 is performed.

38. A computer program product, wherein the computer program product comprises computer instructions; and when a part or all of the computer instructions are run on a computer, the method according to claim 6 or 7 is performed, or the method according to claim 15 or 16 is performed.
